# FASCICULE DE BREVET EUROPEEN

(11) **EP 2 348 692 B1**
(45) Date de publication et mention de la délivrance du brevet: **21.01.2015**
(21) Numéro de dépôt: 11150296.9
(22) Date de dépôt: 06.01.2011
(51) Int. Cl.: H04L 29/12, H04L 12/24

(54) **Procédé de configuration d'un appareil connecté à un réseau de communication IP**
Verfahren zur Einstellung eines an einem IP-Kommunikationsnetzwerk verbundenen Gerätes
Method for configuring an apparatus connected to an IP communication network

(30) Priorité: 20.01.2010 FR 1050345
(43) Date de publication de la demande: 27.07.2011
(73) Titulaire: Schneider Electric Industries SAS, 92500 Rueil-Malmaison (FR)
(72) Inventeur: Bony, Bernard, 38320, EYBENS (FR); Chiche, Thierry, 38330, St ISMIER (FR)
(74) Mandataire: Dufresne, Thierry

(56) Documents cités:
- DE-A1-102007 036 962
- Telemecanique: "Altivar 71 Modbus TCP/IP Ethernet card", User's manual, mai 2005 (2005-05), pages 1-74, XP007914682, Extrait de l'Internet: URL:http://www.schneider.nl/docs/VW3A3310% 20Modbus%20TCPIP%20Ethernet%20card.pdf [extrait le 2010-09-03]
- Areces, D: "When the buses stop running", Industrial Ethernet Book, no. 14 / 41 mars 2003 (2003-03), pages 1-2, XP008126530, Extrait de l'Internet: URL:http://www.iebmedia.com [extrait le 2010-09-03]
- PATRICK MOTOROLA BCS M: "DHCP Relay Agent Information Option; rfc3046.txt", IETF STANDARD, INTERNET ENGINEERING TASK FORCE, IETF, CH, 1 janvier 2001 (2001-01-01), XP015008829, ISSN: 0000-0003
- BEATTY J ET AL: "Web Services Dynamic Discovery (WS-Discovery)", SIEMENS. POWER QUALITY. KATALOG SR 10.1.1,, 1 avril 2005 (2005-04-01), pages 1-42, XP002381311,

## Description

La présente invention se rapporte à un procédé d'identification et de configuration d'un appareil connecté à un réseau local de communication IP, permettant à un utilisateur de configurer localement un appareil et de sauvegarder les paramètres d'identification de l'appareil dans un équipement serveur connecté au réseau local de communication IP.

Sous le terme appareil, on désignera ci-après un automate programmable, une station de contrôle/commande, mais aussi tout équipement ou module d'automatisme possédant au moins une unité de traitement, capable de se connecter sur un réseau IP et destiné à piloter, commander, contrôler ou surveiller une application ou process d'automatisme. On inclura ainsi dans cette définition des appareils tels que par exemple variateurs de vitesse, modules métier d'un automate programmable, équipements d'interface homme-machine, commandes numériques, stations de lecture/écriture RFID, modules d'entrées-sorties déportées, capteurs intelligents, etc. Un tel appareil peut s'utiliser dans une application d'automatisme appartenant notamment au domaine des automatismes industriels, des automatismes du bâtiment, du contrôle/commande des réseaux électriques de distribution.

Dans le présent document, le terme réseau de communication IP ou réseau IP désigne un réseau de communication de type Internet, Intranet ou Extranet qui supporte le protocole de communication IP (Internet Protocol). Un tel réseau de communication IP peut indifféremment utiliser différents types de supports physiques (Mediums) et différents protocoles d'accès au réseau (MAC - Media Access Control), comme par exemple un bus filaire ou une liaison point à point conformes au standard Ethernet (IEEE802.3), ou une liaison sans fil conforme au standard WIFI (Wireless Fidelity - IEEE802.11). Le réseau de communication IP est dit local lorsque les appareils connectés communiquent sur ce réseau directement sans passer par des passerelles de communication ou des routeurs : ils communiquent en point-à-point au niveau de la couche liaison.

Une des applications de l'invention concerne le domaine des automatismes dans lequel un appareil communiquant via un réseau local IP possède généralement toujours la même adresse IP. L'adresse IP d'un tel appareil est fixe et n'est pas attribuée dynamiquement, car l'appareil doit pouvoir communiquer avec d'autres appareils qui sont également connectés au réseau local IP et qui le connaissent au travers de son adresse IP fixe. Cette adresse IP est associée à un masque de sous-réseau qui est habituellement attribué à l'appareil ou que l'appareil pourrait éventuellement déterminer à partir de son adresse IP. De plus, dans le cas où l'appareil est destiné à communiquer à communiquer sur un réseau IP global, il doit alors posséder également l'adresse IP d'une passerelle de communication (gateway) entre le réseau local IP et un réseau IP global.

Dans le présent document, le terme "paramètres IP" d'un appareil regroupe l'adresse IP fixe d'un appareil et le masque de sous-réseau associé à cette adresse IP, ainsi qu'éventuellement l'adresse IP d'une passerelle de communication. Lorsqu'un appareil doit être remplacé, le nouvel appareil doit recevoir les mêmes paramètres IP pour pouvoir communiquer sur le réseau local IP dans les mêmes conditions que l'appareil remplacé.

Dans le présent document, le terme "paramètres d'identification" d'un appareil regroupe les paramètres IP de l'appareil ainsi qu'un identifiant de l'appareil qui est associé à ces paramètres IP. L'identifiant d'un appareil est un code unique permettant d'identifier cet appareil au niveau du réseau local IP.

Un serveur d'adresses est un équipement informatique qui est notamment capable d'assigner des paramètres IP à des appareils qui sont connectés sur le même réseau local IP que le serveur. Le protocole de communication DHCP (Dynamic Host Configuration Protocol) est un protocole qui est souvent utilisé par un serveur d'adresses. Dans le présent document, un serveur DHCP désignera un serveur d'adresses qui supporte le protocole DHCP. Un serveur DHCP comporte donc un agent serveur DHCP et est capable de fournir des paramètres IP à tout appareil doté d'un agent client DHCP et connecté sur un même réseau local IP que le serveur DHCP.

De façon classique, un serveur DHCP mémorise en interne une pluralité de paramètres d'identification. Ainsi, un appareil possédant un identifiant unique peut à tout moment envoyer au serveur DHCP une requête d'identification contenant son identifiant de façon à recevoir une réponse du serveur DHCP contenant les paramètres IP associés à cet identifiant, ce qui lui permet alors de communiquer sur le réseau IP.

Cette fonctionnalité du serveur DHCP est utilisée en particulier pour remplacer un appareil défectueux. En effet, lors du remplacement d'un appareil défectueux par un nouvel appareil équivalent, l'utilisateur doit seulement affecter à ce nouvel appareil un identifiant qui doit être le même que l'identifiant de l'ancien appareil remplacé, de façon à ce que ce nouvel appareil soit identifié sur le réseau local comme étant identique à l'ancien appareil remplacé. Ainsi, une fois connecté au réseau local IP, le nouvel appareil enverra une requête d'identification au serveur DHCP pour recevoir les paramètres IP correspondant à l'ancien appareil remplacé. Ceci permet d'effectuer un remplacement d'un appareil défectueux de façon transparente pour l'utilisateur.

Un tel procédé est connu du manuel d'utilisateur "Altivar 71 Modbus TCP/IP Ethernet card", Telemecanique, 2005.

Pour pouvoir remplir cette fonctionnalité d'attribution d'adresses IP, un serveur DHCP doit évidemment être configuré au préalable de façon à stocker en mémoire les paramètres d'identification (c'est-à-dire paramètres IP et identifiant associé) correspondants aux différents appareils connectés au réseau local IP.

Cependant, cette opération préliminaire de configuration d'un serveur DHCP nécessite habituellement l'intervention d'un administrateur système qui effectue cette opération par exemple à l'aide de moyens informatiques, tel qu'un ordinateur connecté directement ou via une architecture informatique au serveur DHCP, de façon à rentrer les différents paramètres d'identification à mémoriser dans le serveur DHCP. Or, beaucoup d'utilisateurs issus du monde des automatismes ne sont pas familiarisés avec de tels mécanismes et peuvent trouver cette opération préliminaire complexe et fastidieuse.

De plus, cette opération doit pouvoir être renouvelée en cas de modification d'une application d'automatisme existante, comme par exemple lors de l'adjonction d'un nouveau type d'appareil à connecter au réseau local IP. Ceci contribue à rendre l'opération fastidieuse pour les utilisateurs en charge de la maintenance de l'installation.

Un but de l'invention est donc de proposer une méthode permettant de simplifier l'opération de configuration qui consiste à sauvegarder dans une mémoire d'un serveur DHCP les paramètres d'identification des différents appareils qui sont ou seront connectés sur le même réseau local IP, afin que le serveur DHCP soit opérationnel pour attribuer des paramètres d'identification. L'invention facilite ainsi le travail d'un utilisateur puisqu'elle permet une configuration automatique du serveur DHCP avec les paramètres d'identification des différents appareils connectés au réseau local. L'invention est particulièrement utile lors de la mise en service initiale d'une application d'automatisme, lors d'une modification d'une application d'automatisme existante (adjonction d'un appareil par exemple), lors du remplacement d'un appareil défectueux et lors de la connexion d'un nouveau serveur DHCP sur le réseau local IP.

Pour cela, l'invention décrit un procédé de configuration d'un appareil connecté à un réseau local de communication IP, l'appareil possédant une mémoire contenant des paramètres d'identification qui comprennent un identifiant et des paramètres IP de l'appareil. Le procédé comprend une étape de détection durant laquelle l'appareil détecte la présence d'un serveur DHCP connecté au réseau local de communication IP, le serveur DHCP comportant une mémoire interne et des moyens de réception des paramètres d'identification de l'appareil, la mémoire interne du serveur DHCP ne contenant pas de configuration préalable comprenant les paramètres d'identification de l'appareil, une étape d'envoi durant laquelle l'appareil envoie au serveur DHCP via le réseau local de communication IP les paramètres d'identification mémorisés dans l'appareil, une étape d'enregistrement durant laquelle le serveur DHCP valide et sauvegarde dans sa mémoire interne les paramètres d'identification envoyés par l'appareil, de façon à obtenir une configuration automatique du serveur DHCP.

Selon une caractéristique, lorsque le serveur DHCP a mémorisé durant l'étape d'enregistrement les paramètres d'identification envoyés par l'appareil, le serveur DHCP renvoie un message de validation à l'appareil via le réseau local de communication IP. Selon une autre caractéristique, l'appareil applique les paramètres d'identification envoyés au serveur DHCP lorsque l'appareil a reçu le message de validation du serveur DHCP.

Selon une autre caractéristique, le procédé comporte aussi une étape de configuration locale de l'appareil, dans laquelle un utilisateur saisit des paramètres d'identification de l'appareil à l'aide de moyens de dialogue homme-machine reliés à l'appareil, puis l'appareil mémorise les paramètres d'identification saisis.

Selon une autre caractéristique, l'étape de détection est effectuée périodiquement lorsque l'appareil ne détecte pas la présence d'un serveur DHCP connecté au réseau local de communication IP.

Selon un mode de réalisation, le procédé est basé sur des messages utilisant le même format que le protocole DHCP. Selon un autre mode de réalisation, le procédé est basé sur l'utilisation de services Web conformes à la spécification DPWS (Device Profile Web Services), l'appareil utilisant le standard de découverte WS-Discovery de la spécification DPWS durant l'étape de détection et le serveur DHCP expose un service Web de configuration pour l'envoi par l'appareil des paramètres d'identification durant l'étape d'envoi.

D'autres caractéristiques et avantages vont apparaître dans la description détaillée qui suit en se référant à un mode de réalisation donné à titre d'exemple et représenté par les dessins annexés sur lesquels :
- la figure 1 montre un exemple simplifié d'une architecture avec un serveur DHCP relié à plusieurs appareils via un réseau local IP,
- La figure 2 montre un exemple de schéma décrivant le procédé selon l'invention.

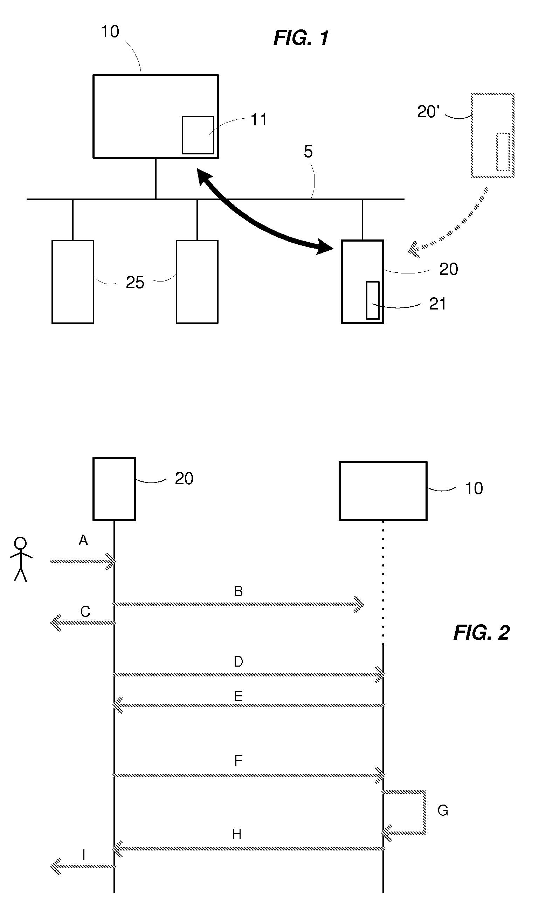

En référence à la figure 1, un système d'automatisme comporte un équipement serveur 10 qui est connecté à un réseau local de communication IP 5. Le système d'automatisme comporte également plusieurs appareils 20, 25 également connectés sur le réseau local de communication IP 5.

L'équipement serveur 10 est un serveur DHCP, c'est-à-dire un serveur d'adresses qui supporte le protocole DHCP. Le serveur 10 comprend une mémoire interne 11 et des moyens de traitement (non représentés sur les figures) capables d'exécuter un agent serveur DHCP. Grâce à l'utilisation du protocole DHCP, le serveur DHCP 10 est capable d'assigner automatiquement des paramètres IP à des appareils 20, 25 connectés sur le même réseau local IP 5 que le serveur 10. Les paramètres IP d'un appareil comportent au moins une adresse IP de l'appareil associée à un masque de sous-réseau, ainsi qu'éventuellement une adresse IP d'une passerelle de communication (gateway). Les paramètres d'identification d'un appareil comportent les paramètres IP de l'appareil associés à un identifiant de l'appareil. L'identifiant de l'appareil 20 est un code unique sur le réseau IP local 5 et les adresses IP des appareils 20,25 sont fixes. Les appareils 20, 25 comprennent une mémoire interne 21 et des moyens de traitement (non représentés sur les figures) capables d'exécuter un agent client DHCP.

Pour remplir cette fonction d'assignation des paramètres IP aux différents appareils 20, 25 connectés au réseau local IP 5, le serveur 10 doit au préalable posséder dans sa mémoire interne les paramètres d'identification des différents appareils. Or, il s'avère que dans les solutions existantes, la phase préliminaire permettant d'entrer dans la mémoire d'un serveur DHCP des paramètres d'identification est une opération fastidieuse et compliquée pour les utilisateurs d'un système d'automatisme, car elle utilise généralement des moyens informatiques. De plus, cette phase n'est pas couverte par la spécification et les requêtes standard du protocole DHCP.

L'invention consiste donc à donner la capacité à tout appareil 20 connecté au réseau local IP 5 de transmettre au serveur DHCP 10 ses propres paramètres d'identification mémorisés dans sa mémoire interne 21, de telle sorte que le serveur DHCP 10 puisse les sauvegarder dans sa mémoire interne 11. Ainsi, la configuration préliminaire d'un serveur DHCP 10 est effectuée non pas par l'intervention d'un administrateur système, mais directement par les différents appareils connectés au réseau local IP 5. Une fois cette configuration préliminaire effectuée, le serveur DHCP 10 sera capable d'attribuer automatiquement des paramètres IP par exemple à un appareil de remplacement 20' destiné à remplacer l'appareil 20, sous réserve d'avoir donné à cet appareil de remplacement 20' le même identifiant que celui de l'appareil 20.

Par ailleurs, les paramètres d'identification d'un appareil peuvent également comprendre des informations fonctionnelles relatives à la configuration ou à la programmation de l'appareil, telles que des paramètres de réglages ou de fonctionnement spécifiques à l'application d'automatisme. Ainsi, lors du remplacement d'un appareil défectueux 20 par un nouvel appareil identique 20', celui-ci pourra avantageusement récupérer non seulement les paramètres IP de l'appareil 20 mais aussi toutes les informations fonctionnelles nécessaires au bon redémarrage et au fonctionnement de l'application d'automatisme, de sorte que le nouvel appareil 20' sera complètement opérationnel de façon transparente pour l'utilisateur. Le chargement des paramètres de réglages ou de fonctionnement dans le nouvel appareil 20' se fait préférentiellement à l'aide du protocole de communication FTP (File Transfer Protocol) ou TFTP (Trivial File Transfer Protocol), à partir d'un serveur de fichiers FTP/TFTP connecté au réseau local 5.

Selon un mode de réalisation particulier de l'invention, le serveur DHCP 10 et le serveur de fichiers FTP/TFTP peuvent être implantés dans un même équipement, comme par exemple un module de communication d'un automate programmable, de façon notamment à optimiser le nombre d'équipements.

La figure 2 montre un exemple de déroulement du procédé de configuration de l'appareil 20 relié au serveur DHCP 10. Lors de la première installation d'un appareil 20 dans l'application d'automatisme, il faut d'abord introduire dans cet appareil 20 des paramètres d'identification. Cette étape A de configuration locale de l'appareil 20 notée est réalisable par l'utilisateur à l'aide de plusieurs solutions connues.

Indifféremment, la configuration locale peut s'effectuer lorsque l'appareil 20 est déjà connecté au réseau local IP 5, mais peut aussi s'effectuer avant de connecter l'appareil 20, par exemple lors d'une phase préalable de préparation ou de réglage en usine. Une fois saisis, les paramètres d'identification de l'appareil sont évidemment mémorisés dans la mémoire interne 21 de l'appareil 20, de telle sorte que l'appareil 20 est opérationnel.

Plusieurs moyens simples peuvent être utilisés pour affecter un identifiant à un appareil donné, comme par exemple des roues codeuses ou des switches à positionner dans l'appareil, un nombre ou un code saisi grâce à une interface homme-machine de l'appareil (clavier - afficheur), etc. Pour introduire les autres paramètres d'identification de l'appareil (paramètres IP, paramètres fonctionnels,...), l'utilisateur peut également utiliser divers moyens de dialogue homme-machine reliés à l'appareil, tel qu'un terminal relié à l'appareil de façon filaire ou non-filaire. D'autres possibilités sont envisageables pour effectuer cette configuration locale comme par exemple le téléchargement des paramètres d'identification de l'appareil à partir d'un poste distant.

Le procédé comporte une première étape de détection durant laquelle l'appareil recherche s'il existe sur le réseau IP 5 un serveur DHCP 10 dit auto-configurable, c'est-à-dire un serveur DHCP 10 qui comporte des moyens de réception de paramètres d'identification provenant d'un appareil 20, de façon à sauvegarder en interne ces paramètres d'identification envoyés par l'appareil.

Selon un premier mode de réalisation, le procédé est basé sur des messages utilisant le même format que le protocole DHCP. En effet, l'invention prévoit une extension du protocole DHCP, en respectant le même format de message, qui consiste à définir de nouveaux types de messages supplémentaires, émis en broadcast UDP (User Datagram Protocol) et implantés dans les appareils et dans le serveur DHCP. Ces nouveaux messages sont par exemple :
- DHCP PROBE : (appareil client vers serveur) requête de recherche d'un serveur DHCP auto-configurable sur un réseau local IP.
- DHCP PROBEMATCH : (serveur vers appareil client) réponse à une requête de recherche indiquant la présence d'un serveur DHCP auto-configurable.
- DHCP CONFIG : (appareil client vers serveur) requête d'envoi des paramètres d'identification d'un appareil vers un serveur DHCP auto-configurable.
- DHCP VALIDCONFIG : (serveur vers appareil client) réponse à une requête d'envoi indiquant que le serveur DHCP a validé et mémorisé les paramètres d'identification de l'appareil.

Ainsi, lors de l'étape de détection, l'appareil 20 envoie une requête de recherche B (DHCP PROBE) sur le réseau IP 5. Dans l'exemple de la figure 2, aucun serveur DHCP 10 n'est connecté sur le réseau IP et donc l'appareil ne reçoit pas de réponse à sa requête B. Dans ce cas, il est possible de prévoir une action C pour signaler que les paramètres d'identification de l'appareil 20 ne sont pas encore enregistrés dans un serveur DHCP, comme une signalisation par voyant ou autres.

Tant que l'appareil 20 ne détecte pas la présence d'un serveur DHCP 10 connecté au réseau local IP, l'invention prévoit que l'appareil 20 continue d'effectuer l'étape de détection et réitère sa requête de recherche de façon périodique.

La figure 2 montre ainsi une nouvelle requête de recherche D émise par l'appareil 20. Si le serveur DHCP 10 est connecté au réseau IP 5 et est auto-configurable, il renvoie une réponse E (DHCP PROBEMATCH) à la requête de recherche D, indiquant ainsi sa présence à l'appareil 20.

Le procédé prévoit ensuite une étape d'envoi durant laquelle l'appareil 20 envoie au serveur DHCP 10 une requête d'envoi F (DHCP CONFIG), contenant les paramètres d'identification mémorisés dans l'appareil 20. Lorsque le serveur DHCP 10 reçoit cette requête d'envoi, le procédé comporte une étape d'enregistrement G durant laquelle le serveur DHCP 10 valide puis stocke dans sa mémoire interne 11 les paramètres d'identification envoyés par l'appareil 20.

Enfin, lorsque le serveur DHCP 10 a mémorisé les paramètres d'identification envoyés par l'appareil 20, il renvoie un message de validation en réponse à la requête d'envoi H (DHCP VALIDCONFIG) pour confirmer que les paramètres d'identification envoyés par l'appareil 20 ont été validés et sauvegardés dans le serveur DHCP. Une fois cette confirmation reçue, plusieurs actions peuvent être effectuées par l'appareil 20, comme par exemple une action l pour signaler que les paramètres d'identification de l'appareil 20 sont enregistrés dans le serveur DHCP 10 (signalisation par voyant ou autres).

Optionnellement, on peut aussi envisager que l'appareil 20 n'applique les paramètres d'identification envoyés au serveur DHCP que lorsqu'il a reçu le message de validation du serveur DHCP.

Dans un second mode de réalisation, le procédé selon l'invention est implémenté sur la base de services Web conformes à la spécification DPWS et au protocole IPv6. Dans ce second mode de réalisation, l'appareil 20 utilise le standard de découverte WS-Discovery de DPWS durant l'étape de détection pour rechercher la présence d'un serveur DHCP 10 auto-configurable connecté au réseau local IP 5. Pour cela, le serveur DHCP 10 doit s'identifier avec un type particulier, exposant les fonctionnalités spécifiques d'un serveur DHCP 10 auto-configurable. Puis, le serveur DHCP 10 expose un service Web de configuration (SetConfiguration) qui sera utilisé par l'appareil 20 pour envoyer ses paramètres d'identification durant l'étape d'envoi. Ensuite, durant l'étape d'enregistrement, les paramètres d'identification seront validés et sauvegardés dans la mémoire interne 11, avant que le serveur DHCP 10 ne renvoie une réponse de confirmation au service Web de configuration (SetConfiguration).

Le procédé décrit ci-dessus est effectué lors de la première mise en service d'un appareil 20 dans l'application d'automatisme, mais peut aussi s'effectuer suite à différents événements, tels que par exemple le remplacement du serveur DHCP 10, la modification des paramètres d'identification d'un appareil, l'adjonction d'un nouvel appareil connecté au réseau local IP 5, etc.

Quand le serveur DHCP 10 a sauvegardé les paramètres d'identification de l'appareil 20, on retrouve le fonctionnement classique d'un serveur DHCP, notamment dans le cas d'un remplacement de l'appareil 20 (FDR : Faulty Device Replacement). Quand un utilisateur veut remplacer l'appareil 20 défectueux par un appareil semblable 20' chargé d'effectuer les mêmes fonctions dans l'application d'automatisme, il doit simplement affecter à ce nouvel appareil 20' le même identifiant que celui de l'appareil 20 et le connecter au réseau local IP 5. Ensuite, durant une étape d'identification, l'appareil 20' envoie au serveur DHCP 10 une requête d'identification contenant l'identifiant de l'appareil 20'. Le serveur DHCP 10 sélectionne alors dans sa mémoire interne 11 les paramètres IP mémorisés qui correspondent à l'identifiant reçu et renvoie à l'appareil 20' une réponse contenant les paramètres IP sélectionnés. Ainsi, l'appareil 20' recevra exactement les mêmes paramètres IP que ceux de l'appareil 20 remplacé et pourra donc fonctionner de la même façon.

## Revendications

1. Procédé de configuration d'un appareil (20) connecté à un réseau local de communication IP (5), l'appareil (20) possédant une mémoire (21) contenant des paramètres d'identification qui comprennent un identifiant et des paramètres IP de l'appareil, le procédé comprenant :
- une étape de détection durant laquelle l'appareil (20) détecte la présence d'un serveur DHCP (10) connecté au réseau local de communication IP (5), le serveur DHCP (10) comportant une mémoire interne (11) et des moyens de réception des paramètres d'identification de l'appareil (20), la mémoire interne (11) du serveur DCHCP (10) ne contenant pas de configuration préalable comprenant les paramètres d'identification de l'appareil (20),
- une étape d'envoi durant laquelle l'appareil (20) envoie au serveur DHCP (10) les paramètres d'identification mémorisés dans l'appareil (20) via le réseau local de communication IP (5),
- une étape d'enregistrement durant laquelle le serveur DHCP (10) valide et sauvegarde dans sa mémoire interne (11) les paramètres d'identification envoyés par l'appareil (20), de façon à obtenir une configuration automatique du serveur DHCP.

2. Procédé de configuration selon la revendication 1, **caractérisé en ce que**, lorsque le serveur DHCP (10) a mémorisé durant l'étape d'enregistrement les paramètres d'identification envoyés par l'appareil (20), le serveur DHCP renvoie un message de validation à l'appareil via le réseau local de communication IP (5).

3. Procédé de configuration selon la revendication 2, **caractérisé en ce que** l'appareil (20) applique les paramètres d'identification envoyés au serveur DHCP (10) lorsque l'appareil (20) a reçu le message de validation du serveur DHCP (10).

4. Procédé de configuration selon la revendication 1, **caractérisé en ce que** le procédé comporte aussi une étape de configuration locale de l'appareil (20), dans laquelle un utilisateur saisit des paramètres d'identification de l'appareil à l'aide de moyens de dialogue homme-machine reliés à l'appareil, puis l'appareil (20) mémorise les paramètres d'identification saisis.

5. Procédé de configuration selon la revendication 1, **caractérisé en ce que** l'étape de détection est effectuée périodiquement lorsque l'appareil (20) ne détecte pas la présence d'un serveur DHCP (10) connecté au réseau local de communication IP (5).

6. Procédé de configuration selon la revendication 1, **caractérisé en ce que** le procédé est basé sur des messages utilisant le même format que le protocole DHCP.

7. Procédé de configuration selon la revendication 1, **caractérisé en ce que** le procédé est basé sur l'utilisation de services Web conformes à la spécification DPWS (Device Profile Web Services), l'appareil (20) utilisant le standard de découverte WS-Discovery de la spécification DPWS durant l'étape de détection et le serveur DHCP (10) expose un service Web de configuration pour l'envoi par l'appareil (20) des paramètres d'identification durant l'étape d'envoi.

## Patentansprüche

1. Verfahren zum Konfigurieren einer Vorrichtung (20), die an ein lokales IP-Kommunikationsnetz (5) angeschlossen ist, wobei die Vorrichtung (20) einen Speicher (21) besitzt, der Identifizierungsparameter enthält, die eine Kennung und IP-Parameter der Vorrichtung umfassen, wobei das Verfahren Folgendes umfasst:
- einen Detektionsschritt, in dem die Vorrichtung (20) das Vorhandensein eines DHCP-Servers (10) detektiert, der an das lokale IP-Kommunikationsnetz (5) angeschlossen ist, wobei der DHCP-Server (10) einen internen Speicher (11) und Mittel zum Empfangen der Identifizierungsparameter der Vorrichtung (20) umfasst, wobei der interne Speicher (11) des DHCP-Servers (10) keine im Voraus erfolgte Konfiguration enthält, die die Identifizierungsparameter der Vorrichtung (20) umfasst,
- einen Sendeschritt, in dem die Vorrichtung (20) zu dem DHCP-Server (10) die in der Vorrichtung (20) gespeicherten Identifizierungsparameter über das lokale IP-Kommunikationsnetz (5) sendet,
- einen Aufzeichnungsschritt, in dem der DHCP-Server (10) die von der Vorrichtung (20) gesendeten Identifizierungsparameter validiert und in seinem internen Speicher (11) sichert, derart, dass
eine automatische Konfiguration des DHCP-Servers erreicht wird.

2. Konfigurationsverfahren nach Anspruch 1, **dadurch gekennzeichnet, dass** der DHCP-Server (10) dann, wenn er während des Aufzeichnungsschrittes die von der Vorrichtung (20) gesendeten Identifizierungsparameter gespeichert hat, eine Validierungsnachricht über das lokale IP-Kommunikationsnetz (5) zu der Vorrichtung zurücksendet.

3. Konfigurationsverfahren nach Anspruch 2, **dadurch gekennzeichnet, dass** die Vorrichtung (20) die zu dem DHCP-Server (10) gesendeten Identifizierungsparameter anwendet, wenn die Vorrichtung (20) die Validierungsnachricht von dem DHCP-Server (10) empfangen hat.

4. Konfigurationsverfahren nach Anspruch 1, **dadurch gekennzeichnet, dass** das Verfahren außerdem einen Schritt zum lokalen Konfigurieren der Vorrichtung (20) umfasst, in dem ein Anwender die Identifizierungsparameter der Vorrichtung mit Hilfe von Mensch/Maschine-Dialogmitteln, die mit der Vorrichtung verbunden sind, erfasst, woraufhin die Vorrichtung (20) die erfassten Identifizierungsparameter speichert.

5. Konfigurationsverfahren nach Anspruch 1, **dadurch gekennzeichnet, dass** der Detektionsschritt periodisch ausgeführt wird, wenn die Vorrichtung (20) das Vorhandensein eines an das lokale IP-Kommunikationsnetz (5) angeschlossenen DHCP-Servers (10) nicht detektiert.

6. Konfigurationsverfahren nach Anspruch 1, **dadurch gekennzeichnet, dass** das Verfahren auf Nachrichten basiert, die dasselbe Format wie das DHCP-Protokoll nutzen.

7. Konfigurationsverfahren nach Anspruch 1, **dadurch gekennzeichnet, dass** das Verfahren auf der Verwendung von Web-Diensten gemäß der DPWS-Spezifikation (Device Profile Web Services-Spezifikation) basiert, wobei die Vorrichtung (20) den Entdeckungsstandard WS-Descovery der DPWS-Spezifikation in dem Detektionsschritt verwendet und der DHCP-Server (10) einen Web-Konfigurationsdienst ausführt, um die Identifizierungsparameter während des Sendeschritts durch die Vorrichtung (20) zu senden.

## Claims

1. Method for configuring a device (20) connected to an IP communication LAN (5), the device (20) having a memory (21) containing identification parameters that comprise an identifier and IP parameters of the device, the method comprising:
- a detection step during which the device (20) detects the presence of a DHCP server (10) connected to the IP communication LAN (5), the DHCP server (10) including an internal memory (11) and means for receiving the identification parameters of the device (20), the internal memory (11) of the DHCP server (10) not containing any prior configuration comprising the identification parameters of the device (20),
- a sending step during which the device (20) sends to the DHCP server (10) the identification parameters stored in the memory of the device (20) via the IP communication LAN (5),
- a storage step during which the DHCP server (10) validates and saves in its internal memory (11) the identification parameters sent by the device (20), so as to obtain an automatic configuration of the DHCP server.

2. Configuring method according to Claim 1, **characterized in that**, when the DHCP server (10) has, in the storage step, stored in memory the identification parameters sent by the device (20), the DHCP server returns a validation message to the device via the IP communication LAN (5).

3. Configuring method according to Claim 2, **characterized in that** the device (20) applies the identification parameters sent to the DHCP server (10) when the device (20) has received the validation message from the DHCP server (10).

4. Configuring method according to Claim 1, **characterized in that** the method also includes a step of local configuration of the device (20), in which a user inputs the identification parameters of the device using human-machine dialogue means linked to the device, then the device (20) stores the inputted identification parameters in memory.

5. Configuring method according to Claim 1, **characterized in that** the detection step is carried out periodically when the device (20) does not detect the presence of a DHCP server (10) connected to the IP communication LAN (5).

6. Configuring method according to Claim 1, **characterized in that** the method is based on messages using the same format as the DHCP protocol.

7. Configuring method according to Claim 1, **characterized in that** the method is based on the use of Web services in accordance with the DPWS (Device Profile Web Services) specification, the device (20) using the WS-Discovery discovery standard of the DPWS specification during the detection step and the DHCP server (10) discloses a configuration Web service for the sending of the identification parameters by the device (20) during the sending step.
